(19) **Europäisches Patentamt**
**European Patent Office**
**Office européen des brevets**

(11) **EP 1 395 874 B1**

(12) **EUROPEAN PATENT SPECIFICATION**

(45) Date of publication and mention
of the grant of the patent:
**05.09.2007 Bulletin 2007/36**

(51) Int Cl.:
**G03B 21/16** *(2006.01)* **G03B 21/20** *(2006.01)*

(21) Application number: **02731019.2**

(22) Date of filing: **10.06.2002**

(86) International application number:
**PCT/NO2002/000203**

(87) International publication number:
**WO 2002/101458 (19.12.2002 Gazette 2002/51)**

(54) **LAMPHOUSE**

LAMPENGEHÄUSE

LANTERNE

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **11.06.2001 NO 20012878**

(43) Date of publication of application:
**10.03.2004 Bulletin 2004/11**

(73) Proprietor: **Bård Eker Industrial Design AS
1634 Gamle Fredrikstad (NO)**

(72) Inventor: **GULLIKSEN, Morten
N-0860 Oslo (NO)**

(74) Representative: **Onn, Thorsten et al
Zacco Sweden AB
P.O. Box 23101
104 35 Stockholm (SE)**

(56) References cited:
**US-A- 4 290 097 US-A- 4 925 295
US-A- 4 985 815 US-B1- 6 227 686**

- **PATENT ABSTRACTS OF JAPAN vol. 1998, no. 6
30 April 1998 & JP 10 048 747 A (HITACHI LTD.)
20 February 1998**
- **PATENT ABSTRACTS OF JAPAN vol. 1997, no. 2
28 February 1997 & JP 08 262 573 A (FUJITSU
GENERAL LTD.) 11 January 1996**

Printed by Jouve, 75001 PARIS (FR)

## Description

The present invention relates to a device for use in cooling lamps and, more specifically, to a lamphouse so designed that a lamp in, for example, an image projector can be optimally cooled by a fan of suitable type

Today there is a market demand for increasingly noiseless and compact projectors. Because it is desirable to maintain the light intensity despite the image projectors diminishing size and because there do not appear to be imminent changes in relevant optical technology, the projector's heat loss (or, the amount of heat generated by a projector) will remain unchanged for the foreseeable future. To reduce the heat that is developed by the lamp, to an acceptable level, a certain amount of heat must be removed from the projector per time unit. The integral product of volume flow and temperature increase across the openings in the projector chassis (i.e., the exit grill) is expressed as:

$$\int \Delta T_{in \to out} \; C_p \; \rho \cdot vdA$$

*Exitgrill*

The air flowing out of the projector must not exceed a temperature of 95°C, as this is the highest temperature permissible on the surface of a plastic exit grill.

A known problem with today's projectors is that the air flowing out of the lamp reflector becomes very hot (200°C-300°C). To prevent this hot air from heating the exit grill to more than 95°C, the hot air must be mixed with cold air in a turbulent flow inside the projector. Since the projector is to be as small as possible, this mixing needs to be done over very short distances. The device according to the invention permits an efficient cooling of this kind and requires neither much space nor high air velocities. Low air velocities are desirable because they cause little energy loss in turbulence and hence little noise. To obtain minimum air velocities, all of the air exiting the exit grill should be close to the maximum temperature allowed. On the other hand, it is important that the cold airflow intended for mixing with the hot air remain along the length the projector chassis until the cold airlow reaches the exit grill, thereby preventing the surface from becoming uncomfortably hot to touch.

Another cooling problem that must be solved is keeping the temperature of the lamp tip (burner tip) from becoming excessively high. A certain airflow must, therefore, be conveyed past the lamp tip to prevent it from overheating and failing.

United States Patent No. 4,925,295 discloses a projection display apparatus having a light source for generating light for image formation. The light source is accommodated in a housing with vent openings. The housing includes a fan for cooling the housing interior, and corresponding air inlets and outlets.

The device according to the invention solves the described problems in an almost ideal manner.

The invention comprises a lamphouse as defined in claim 1 that includes a plurality of fins arranged on the inner surface of the lamphouse, essentially in the area defining the lamphouse chamber. The lamphouse according to the invention also includes a plurality of exhaust openings located on the downstream side of the reflector and the burner. The exhaust openings are arranged substantially perpendicular to the direction of flow of the heated air, and in such manner that when the airflow from the surroundings (which has a temperature approximately equal to the temperature of the air outside the projector) and the heated airflow are mixed in the area immediately after the lamphouse, the resulting airflow will, on reaching the exhaust openings of the projector, have a substantially uniform temperature, preferably lower than 95°C. The internal shape of the lamphouse is complementary to the shape of the lamp and the reflector so that the heat generated by the lamp burner and reflector is essentially transported out of the exhaust openings in the airflow, thereafter to be mixed with the substantially cold airflow. The exhaust openings are configured in such a manner that the heated airflow does not strike the projector chassis before the heated airflow has been mixed with the cooler airflow and before it reaches the exit grill. The exhaust openings are configured in such a manner that the heated air is efficiently mixed with the cooler air and does not remain circulating around the lamphouse. The lamphouse defines an internal flow cross-section that gives a virtually constant airflow velocity from the chamber to and through the respective exhaust openings. The effective flow resistance of the lamphouse in the cold airflow is minimal. The invention comprises also a method of cooling a lamp as defined in claim 10.

The device according to the invention will now be described with reference to the attached drawings, which show the principle features of the invention, and an embodiment of the same. It will be understood that the drawings only show alternative exemplary embodiments, and that they should not therefore be understood as defining the limits of the invention. In the drawings the relevant parts are indicated by reference numerals which will also be used in the following detailed description.

- Figure 1 is a schematic diagram of the device according to the invention wherein:

    Figure 1a is a partly cutaway top view showing a lamp and burner mounted in the lamphouse according to the invention, the inside of the lamphouse, and a section of the projector chassis. The internal flow in the lamphouse is indicated. Figure 1b is a top view showing the same details as Figure 1a, and outlining the external flow across the outer surface of the lamphouse, together with the turbulent area.

Figure 1c is a partly cutaway side view, seen in the upstream direction.

Figure 1d is a front view which shows, among other features, the upper and lower exhaust openings and indicates the turbulent zone.

Figure 1e is a partly cutaway side view, seen in the downstream direction.

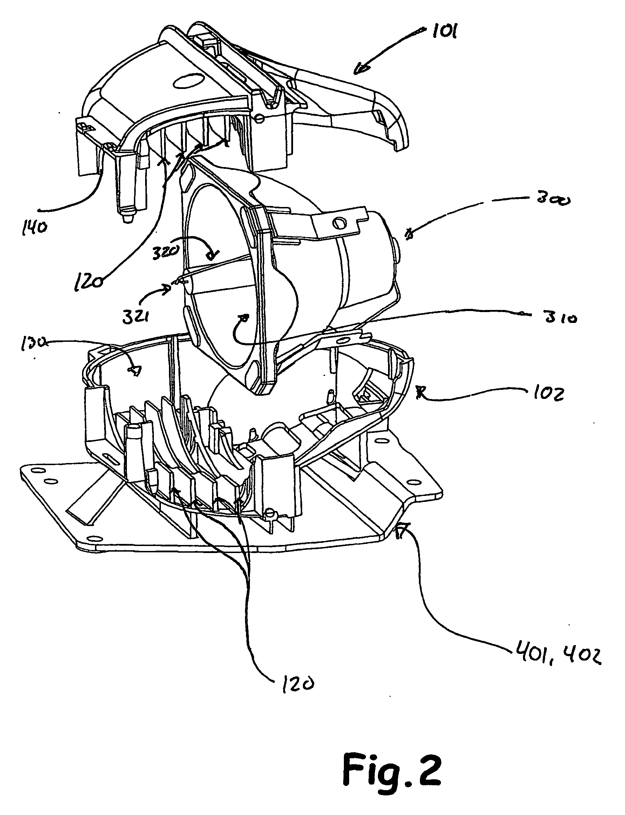

- Figure 2 is a perspective exploded view of an embodiment of the device according to the invention, seen in the general downstream direction.
- Figure 3 is a perspective view of the device in Figure 2, also seen in the general downstream direction, but in an assembled stated and mounted in a part of the projector chassis.

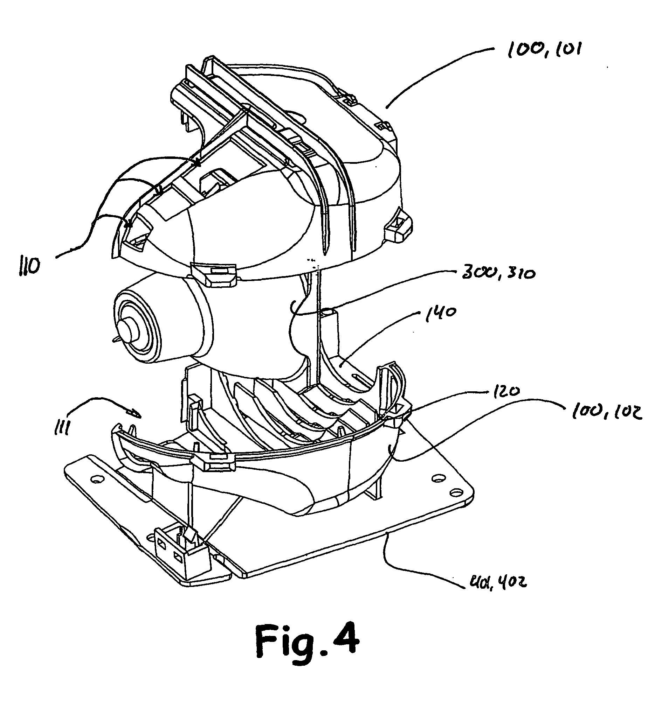

- Figure 4 is a perspective exploded view of the device in Figure 2, but seen in the general upstream direction.

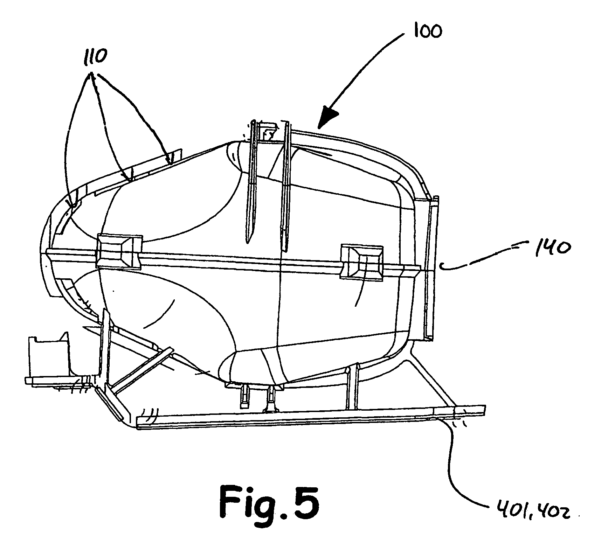

- Figure 5 is a side view of the device in Figure 2, seen in the general upstream direction.

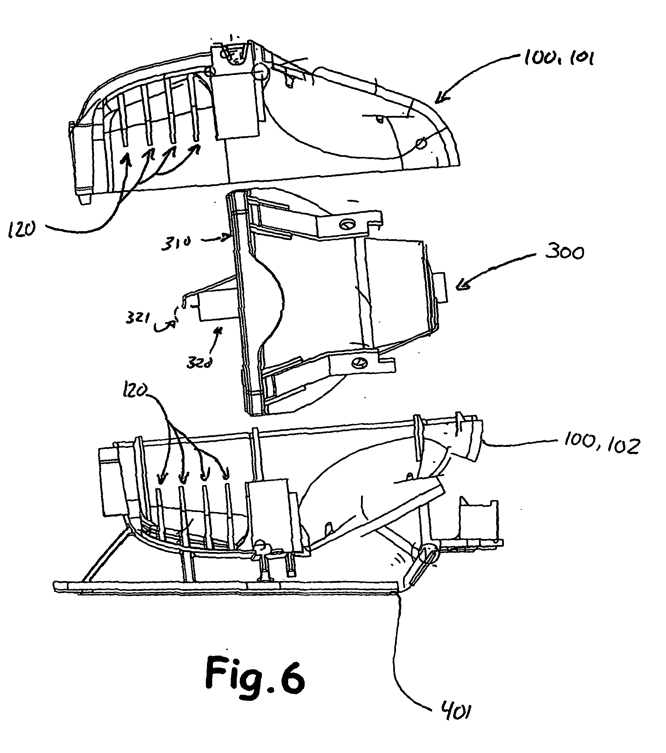

- Figure 6 is an exploded view of the device as shown in Figure 2, seen in the general downstream direction.
- Figure 7 is a side view of the device according to Figure 2, seen in the general downstream direction.
- Figure 8 is a top view of the device in Figure 2.

With reference to the drawings, the device according to the invention comprises a lamphouse 100, which in an alternative embodiment may be composed of an upper half 101 and a lower half 102. The lamphouse 100 is equipped with an air supply opening 111 on the upstream side and a plurality of exhaust openings 110 on the downstream side. The terms "upstream" and "downstream" are used in a conventional manner here and in relation to the general flow direction of the air. The lamphouse 100 comprises internal fixing devices for receiving and fixing a lamp 300. As is well known, the lamp 300 comprises a reflector 310 and a burner 320 with burner tip 321. The lamphouse 100 defines an internal chamber 130 located in front of the lamp reflector 310 and burner 320. A plurality of fins 120 are arranged on the inner surface of the lamphouse 100, essentially in the area defining the chamber 130 and extending essentially in a transverse direction to the longitudinal axis of the burner 320.

At its distal end in relation to the burner 320, the chamber 130 ends in an opening 140 through which light emitted by the lamp 300 propagates for the purpose of generating images in a way that is known.

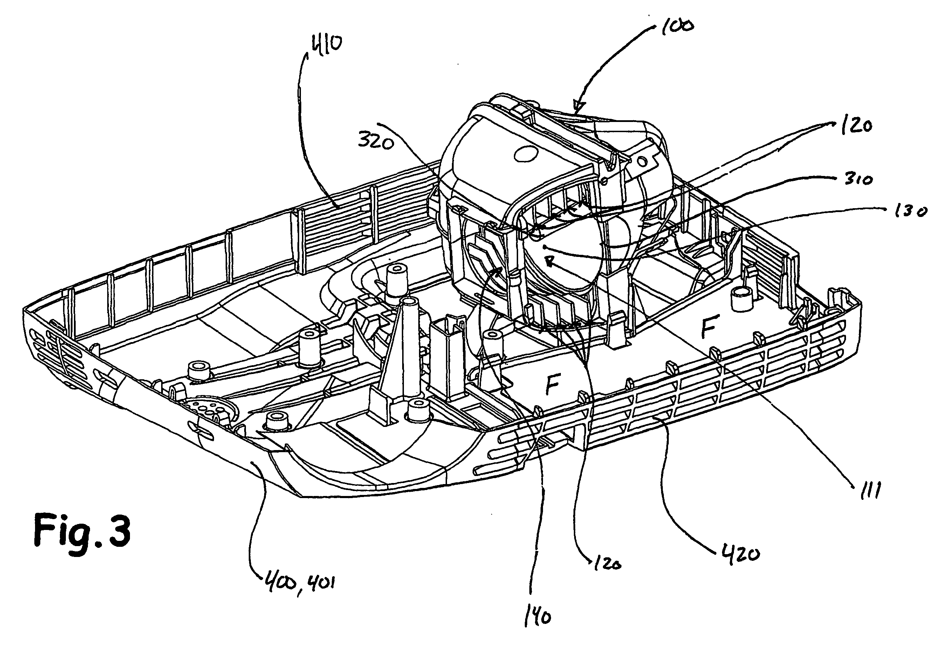

According to one embodiment, the lamphouse 100 with the lamp 300 installed can be mounted in a projector chassis 400 (only a section is shown in figure 3), for example, more specifically in a bottom portion 401 of the projector chassis 400 (only a section is shown), optionally with the use of a bracket 402.

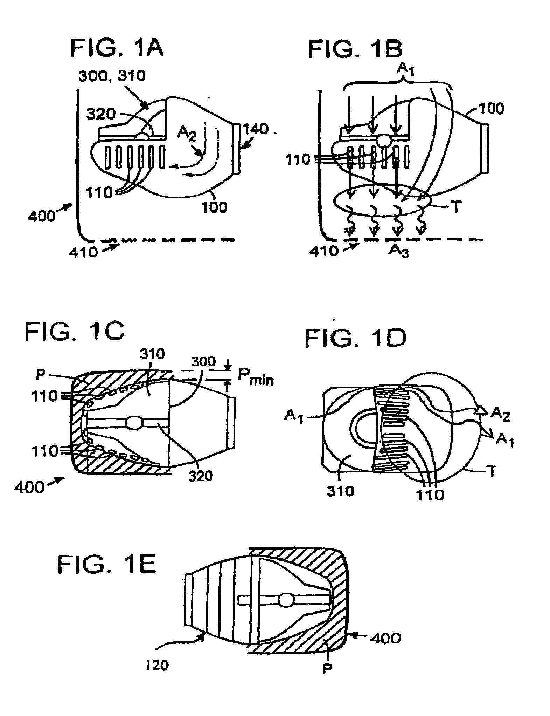

The projector chassis 400 comprises on the upstream side of the lamphouse one or more air intake openings (inlet grill) 420 (figure 3), where air $A_1$ (figure 1) is drawn in from the surroundings by means of fans (not shown) generally arranged in area F (figure 3). The intake air is passed into and around the lamphouse 100 in a manner that will be described in more detail below. The projector chassis 400 further comprises on the downstream side of the lamphouse 100 one or more exhaust openings (exit grill) 410 (figure 3), where heated and "mixed" air $A_3$ is discharged from the projector. The heated air $A_3$ is a mixture of air $A_1$ that flows around the lamphouse 100 and is not heated to an appreciable degree, and air $A_2$ that flows out of the lamphouse 100 after being directly or indirectly heated by the lamp burner 320.

To provide the lamphouse 100 with the right flow conditions, air is blown from the whole of one side. This can be done, for example, with two axial fans (not shown) mounted at an area F next to the lamphouse 100. A positive pressure is then created inside the chamber 130 in front of the lamp 300, which has an intake opening 111 facing the fans. The air then flows past the burner 320 and the reflector 310, where it is exposed to intense heating. The air then moves lightly around the lamp corner and out of a number of slits or exhaust openings 110. The air flows outwardly in a transverse direction to the flow that skims across the outside of the rear part of the lamp 300 or lamphouse 100. The mixing with the cold air starts as soon as the hot air $A_2$ flows from the slits 110 and into the turbulent area T (figure 1). Because the flow cross-section P between the lamphouse 100 and the projector chassis 400 is at a minimum of $P_{min}$ immediately before the slits 110, and because the flow cross-section increases where the slits 110 begin, the air that rises from the slits 110 will not be subjected to a positive pressure, but will instead be able to flow upward freely. Thin fins 120 positioned inside the lamphouse chamber 130 convert radiant heat to hot air which is then transported out through the slits 110.

The shape and size of the exhaust openings are determined with care. To obtain optimal performance, this determination is made at the end of the development phase of the projector after the incoming flow pattern from the fans and the surrounding geometry has been established. To ensure that the hot air (about 200°C) that arises from the slits 110 neither rushes upwards nor remains around the lamphouse 100 like a hot shroud and strikes the exit grill 410 in an unmixed state, the slits 110 have a defined cross-section (e.g., elongate in one embodiment) and are suitably spaced apart. The objective of the mixing is that all air coming from the mixing area is as close as possible to the maximum permissible temperature as the air reaches the exit grill 410. Because of a strong upward movement of hot air, a larger part of the hot air will enter the upper slits 110. The size of the upper openings 110, and as a consequence the air flow therefrom, is reduced to ensure that the heat emitted through the upper and lower openings 110 is about equal.

**Claims**

1. A lamphouse (100) for holding a lamp (300) having a burner (320), said lamphouse comprising:

   - a lamphouse internal chamber (130);
   - an opening (140) for light emitted by the lamp,
   - an air supply opening (111); and
   - a plurality of exhaust openings (110) in the upper half and a plurality of exhaust openings (110) in The lower half;
   wherein
   - the internal shape of the lamphouse being generally complementary to the shape of the lamp;

   **characterized by**:

   - a plurality of fins (120) arranged on the inner surface of the lamphouse internal chamber (130), extending a distance into the chamber (130), said fins being arranged between the opening (140) and the burner (320) in a substantially parallel relationship and substantially transverse to the burner longitudinal axis:
   - the axes of the exhaust openings being arranged in a substantially perpendicular relationship with the axis of said air supply opening; and
   - the exhaust openings being arranged essentially transverse to the direction of the plurality of fins.

2. The lamphouse of claim 1, wherein a portion of the exhaust openings are arranged in a lamphouse upper half (101) and a portion of the exhaust openings are arranged in a lamphouse lower half (102), and wherein the upper exhaust openings have cross-sections that are smaller than cross-sections of the lower exhaust opening.

3. The lamphouse of claim 1, wherein the plurality of exhaust openings are arranged symmetrically in relation to the axis.

4. The lamphouse of claim 1 in combination with a chassis (400) having a wall portion comprising an air inlet grill (420), an air exit grill (410) and a fan arranged therebetween, wherein the lamphouse (100) is positioned within the chassis such that a flow cross-section (P) is formed between the lamphouse and a portion of the lamphouse chassis, and wherein the flow cross-section having a minimum value ($P_{min}$) at the rear end of the lamphouse.

5. The lamphouse of claim 4. wherein the cross-section minimum value ($P_{min}$) is in close proximity to the exhaust openings.

6. The lamphouse of Claim 4, wherein the inlet grill allowing an airflow ($A_1$) from the surroundings to be fed into the chassis, a first stream of the airflow flowing around said lamphouse and a second stream ($A_2$) of the airflow flowing into the lamphouse via the air supply opening (111) where the second stream is heated by the lamp, and out of the lamphouse via the lamphouse exhaust opening for mixing with the first stream, thereby forming a combined airflow ($A_3$) which is discharged from the chassis thorough the exit grill (410).

7. The lamphouse of claim 6. wherein, when in operation, the combined airflow ($A_3$) has a lower temperature than the second stream heated by the lamp.

8. The lamphouse of claim 4, wherein the lamphouse (100) and the chassis (400) are designed to facilitate the combination of the first (A1) and second (A2) air flows to form a third (A3) air flow to be exhausted through the exit grill.

9. The lamphouse of claim 1, comprising an internal flow cross-section giving a substantially constant velocity from the internal chamber to and through the exhaust openings.

10. A method of cooling a lamp (300) in a lamphouse (100) comprising a lamphouse internal chamber (130), an opening (140) for light emitted by the lamp, an air supply opening (111), and a plurality of exhaust openings (110) comprising the steps of:

    - allowing the flowing of an airflow ($A_1$) from the surroundings towards the lamphouse;
    - allowing the flowing of a first stream of the airflow around said lamphouse;
    - allowing the flowing of a second stream ($A_2$) of the airflow into the lamphouse via the air supply opening (111);
    - allowing the second stream to become heated by the lamp; **characterized by** the steps of:
    - allowing the second stream to absorb heat from the internal chamber and a plurality of fins (120) arranged on the inner surface of the lamphouse internal chamber, extending a distance into said chamber (130), said fins being arranged between the opening (140) and a burner (320) in a substantially parallel relationship and substantially transverse to the burner longitudinal axis;
    - allowing the flowing the second air stream out of the lamphouse via the lamphouse exhaust openings (110);
    - allowing the mixing the second air stream with the first stream, thereby forming a combined airflow ($A_3$).

11. The method of claim 10, wherein the lamphouse (100) is mounted in a housing (400) and the airflow

($A_1$) from the surroundings is flowed towards the lamphouse via inlet openings in the chassis (420).

12. The method of claim 10, wherein the flow of the first stream of the airflow around the lamphouse is further controlled by inner walls of said housing (400).

13. The method of claim 10, wherein the combined airflow ($A_3$) has a lower temperature than the second stream heated by the lamp.

14. The method of claim 13, wherein the temperature of the combined airflow ($A_3$) is lower than 95 °C.

**Patentansprüche**

1. Lampengehäuse (100) zur Aufnahme einer Lampe (300) mit einem Reflektor (310) und einem Brenner (320) mit einer Brennerspitze (321), umfassend:

   - eine Lampengehäuse-Innenkammer (130);
   - eine Öffnung (140) für von der Lampe abgegebenes Licht,
   - eine Luftzufuhröffnung (111); und
   - eine Anzahl Austrittsöffnungen (110) in der oberen Hälfte und eine Anzahl Austrittsöffnungen (110) in der unteren Hälfte;

   wobei die Innenform des Lampengehäuses im allgemeinen komplementär zur Form der Lampe ist; **gekennzeichnet:**

   - **durch** eine Anzahl an der inneren Oberfläche der Lampengehäuse-Innenkammer (130) angebrachte Rippen (120), die ein Stück in die Kammer (130) hineinragen, wobei besagte Rippen im Wesentlichen parallel zueinander und im Wesentlichen quer zur Längsachse des Brenners zwischen der Öffnung (140) und dem Brenner (320) angeordnet sind;
   - **dadurch**, dass die Achsen der Austrittsöffnungen im Wesentlichen senkrecht zur Achse besagter Luftzufuhröffnung angeordnet sind; und
   - dass die Austrittsöffnungen im Wesentlichen quer zur Richtung der Anzahl Rippen angeordnet sind.

2. Lampengehäuse nach Anspruch 1, wobei ein Teil der Austrittsöffnungen in einer oberen Hälfte (101) des Lampengehäuses und ein Teil der Austrittsöffnungen in einer unteren Hälfte (102) des Lampengehäuses angeordnet sind, und worin die oberen Austrittsöffnungen Querschnitte aufweisen, die kleiner sind als Querschnitte der unteren Austrittsöffnung.

3. Lampengehäuse nach Anspruch 1, wobei die Anzahl Austrittsöffnungen symmetrisch zur Achse angeordnet sind.

4. Lampengehäuse nach Anspruch 1 in Kombination mit einem Chassis (400) mit einem Wandteil, der ein Lufteinlassgitter (420), ein Luftauslassgitter (410) und einen dazwischen angeordneten Lüfter aufweist, wobei das Lampengehäuse (100) derart im Chassis angeordnet ist, dass zwischen dem Lampengehäuse und einem Teil des Lampengehäuse-Chassis ein Durchflussquerschnitt (P) entsteht, und wobei der Durchflussquerschnitt am hinteren Ende des Lampengehäuses einen Minimalwert ($P_{min}$) aufweist.

5. Lampengehäuse nach Anspruch 4, wobei der Minimalwert des Querschnitts ($P_{min}$) in unmittelbarer Nähe der Austrittsöffnungen liegt.

6. Lampengehäuse nach Anspruch 4, wobei das Einlassgitter die Zufuhr eines Luftstroms ($A_1$) aus der Umgebung in das Chassis gestattet, wobei ein erster Strom des Luftstroms das genannte Lampengehäuse umströmt und ein zweiter Strom ($A_2$) des Luftstroms über die Luftzufuhröffnung (111) in das Lampengehäuse einströmt, wo der zweite Strom durch die Lampe erhitzt wird, und über die Austrittsöffnungen des Lampengehäuses aus dem Lampengehäuse ausströmt, um sich mit dem ersten Strom zu vermischen, wodurch sich ein vereinigter Luftstrom ($A_3$) bildet, der durch das Auslassgitter (410) aus dem Chassis abgeführt wird.

7. Lampengehäuse nach Anspruch 6, wobei der vereinigte Luftstrom ($A_3$) im Betrieb eine niedrigere Temperatur aufweist als der zweite, von der Lampe erhitzte Strom.

8. Lampengehäuse nach Anspruch 4, wobei das Lampengehäuse (100) und das Chassis (400) derart gestaltet sind, dass sie die Vereinigung des ersten ($A_1$) und des zweiten ($A_2$) Luftstroms zur Bildung eines dritten ($A_3$), durch das Auslassgitter abzuführenden Luftstroms erleichtern.

9. Lampengehäuse nach Anspruch 1, mit einem inneren Durchflussquerschnitt, der von der Innenkammer bis zu den Austrittsöffnungen und durch diese hindurch eine im Wesentlichen konstante Geschwindigkeit ergibt.

10. Verfahren zur Kühlung einer Lampe (300) in einem Lampengehäuse (100) mit einer Lampengehäuse-Innenkammer (130), einer Öffnung (140) für von der Lampe abgegebenes Licht, einer Luftzufuhröffnung (111) und einer Anzahl Austrittsöffnungen (110), folgende Schritte umfassend:

- einen Luftstrom (A$_1$) aus der Umgebung zum Lampengehäuse strömen lassen;

- einen ersten Strom des Luftstroms um das genannte Lampengehäuse strömen lassen;

- einen zweiten Strom (A$_2$) des Luftstroms über die Luftzufuhröffnung (111) in das Lampengehäuse einströmen lassen;

- den zweiten Strom von der Lampe erhitzen lassen;

**gekennzeichnet durch** folgende Schritte:

- den zweiten Strom von der Innenkammer und einer Anzahl Rippen (120) Wärme absorbieren lassen, die an der inneren Oberfläche der Lampengehäuse-Innenkammer angebracht sind und die ein Stück in die Kammer (130) hineinragen,

wobei die Rippen im Wesentlichen parallel zueinander und im Wesentlichen quer zur Längsachse des Brenners zwischen der Öffnung (140) und dem Brenner (320) angeordnet sind;

- den zweiten Strom über die Austrittsöffnungen (110) des Lampengehäuses aus dem Lampengehäuse ausströmen lassen;

- das Vermischen des zweiten Luftstroms mit dem ersten Strom ermöglichen, wodurch ein vereinigter Luftstrom (A$_3$) gebildet wird.

11. Verfahren nach Anspruch 10, wobei das Lampengehäuse (100) in einem Gehäuse (400) montiert ist und der Luftstrom (A$_1$) aus der Umgebung dem Lampengehäuse über Einlassöffnungen im Chassis (420) zugeführt wird.

12. Verfahren nach Anspruch 10, wobei die Strömung des ersten Stroms des Luftstroms um das Lampengehäuse zusätzlich durch Innenwände des genannten Gehäuses (400) geführt wird.

13. Verfahren nach Anspruch 10, wobei der vereinigte Luftstrom (A$_3$) eine niedrigere Temperatur aufweist als der zweite, von der Lampe erhitzte Strom.

14. Verfahren nach Anspruch 13, wobei die Temperatur des vereinigten Luftstroms (A$_3$) unter 95 °C beträgt.

**Revendications**

1. Boîte de lampe (100) destinée à loger une lampe (300) ayant un réflecteur (310) et un brûleur (320) avec une pointe de brûleur (321), ladite boîte de lampe comprenant:

- une chambre intérieure (130) de la boîte de lampe;

- une ouverture (140) pour la lumière émise par la lampe,

- une ouverture (111) d'admission d'air; et

- une pluralité d'ouvertures d'échappement (110) dans la moitié supérieure et une pluralité d'ouvertures d'échappement (110) dans la moitié inférieure;

la forme intérieure de la boîte de lampe étant généralement complémentaire à la forme de la lampe; **caractérisée:**

- **par** une pluralité d'ailettes (120) agencées sur la surface intérieure de la chambre intérieure (130) de la boîte de lampe, s'étendant sur une distance vers l'intérieur de la chambre (130), lesdites ailettes étant agencées entre l'ouverture (140) et le brûleur (320) substantiellement parallèlement les unes par rapport aux autres et substantiellement transversalement à l'axe longitudinal du brûleur;

- en ce que les axes des ouvertures d'échappement sont agencés substantiellement perpendiculairement à l'axe de ladite ouverture d'admission d'air; et

- que les ouvertures d'échappement sont agencées essentiellement transversalement à la direction de la pluralité d'ailettes.

2. Boîte de lampe selon la revendication 1, où une partie des ouvertures d'échappement sont agencées dans une moitié supérieure (101) de la boîte de lampe et une partie des ouvertures d'échappement sont agencées dans une moitié inférieure (102) de la boîte de lampe, et où les ouvertures d'échappement supérieures ont des superficies qui sont plus petites que les superficies de l'ouverture d'échappement inférieure.

3. Boîte de lampe selon la revendication 1, où la pluralité d'ouvertures d'échappement sont agencées symétriquement par rapport à l'axe.

4. Boîte de lampe selon la revendication 1 en combinaison avec un châssis (400) ayant une partie de paroi comprenant une grille d'admission d'air (420), une grille d'échappement d'air (410) et un ventilateur agencé entre ces dernières, où la boîte de lampe (100) est positionnée à l'intérieur du châssis de telle manière qu'une section transversale d'écoulement (P) est formée entre la boîte de lampe et une partie du châssis de la boîte de lampe, et où la section transversale d'écoulement présente une valeur minimum (P$_{min}$) à l'extrémité arrière de la boîte de lampe.

5. Boîte de lampe selon la revendication 4, où la valeur

minimum ($P_{min}$) de la section transversale d'écoulement est à proximité immédiate des ouvertures d'échappement.

**6.** Boîte de lampe selon la revendication 4, où la grille d'admission permet d'amener dans le châssis un flux d'air ($A_1$) provenant de l'extérieur, un premier courant du flux d'air s'écoulant autour de ladite boîte de lampe et un deuxième courant ($A_2$) s'écoulant dans la boîte de lampe par l'ouverture d'admission d'air (111) où le deuxième courant est chauffé par la lampe et hors de la boîte de lampe par les ouvertures d'échappement de la boîte de lampe pour se mélanger au premier courant, formant ainsi un flux d'air ($A_3$) combiné qui est évacué du châssis par la grille d'échappement (410).

**7.** Boîte de lampe selon la revendication 6 où, pendant le fonctionnement, le flux d'air combiné ($A_3$) a une température inférieure à celle du deuxième courant chauffé par la lampe.

**8.** Boîte de lampe selon la revendication 4, où la boîte de lampe (100) et le châssis (400) sont conçus de manière à faciliter la combinaison du premier ($A_1$) et du deuxième ($A_2$) flux d'air afin de former un troisième ($A_3$) flux d'air destiné à être évacué par la grille d'échappement.

**9.** Boîte de lampe selon la revendication 1, comprenant une coupe transversale d'écoulement intérieure produisant une vitesse substantiellement constante depuis la chambre intérieure jusqu'aux ouvertures d'échappement et à travers celles-ci.

**10.** Procédé de refroidissement d'une lampe (300) dans une boîte de lampe (100) comprenant une chambre intérieure (130) de la boîte de lampe, une ouverture (140) pour la lumière émise par la lampe, une ouverture d'admission d'air (111) et une pluralité d'ouvertures d'échappement (110), comprenant les étapes consistant à:

- permettre l'écoulement vers la boîte de lampe d'un flux d'air ($A_1$) provenant de l'extérieur;
- permettre l'écoulement d'un premier courant du flux d'air autour de ladite boîte de lampe;
- permettre l'écoulement d'un deuxième courant ($A_2$) du flux d'air dans la boîte de lampe par l'ouverture d'admission d'air (111);
- permettre l'échauffement du deuxième courant par la lampe;

**caractérisé par** les étapes consistant à:

- permettre que le deuxième courant absorbe de la chaleur de la chambre intérieure et d'une pluralité d'ailettes (120) agencées sur la surface intérieure de la chambre intérieure de la boîte de lampe, s'étendant sur une distance vers l'intérieur de la chambre (130), lesdites ailettes étant agencées entre l'ouverture (140) et le brûleur (320) substantiellement parallèlement les unes par rapport aux autres et substantiellement transversalement à l'axe longitudinal du brûleur;
- permettre l'écoulement du deuxième courant d'air hors de la boîte de lampe par les ouvertures d'échappement (110) de la boîte de lampe;
- permettre le mélange du deuxième courant d'air avec le premier courant, formant ainsi un flux d'air combiné ($A_3$).

**11.** Procédé selon la revendication 10, où la boîte de lampe (100) est montée dans un boîtier (400) et le flux d'air ($A_1$) provenant de l'extérieur est amené vers la boîte de lampe par des ouvertures d'admission dans le châssis (420).

**12.** Procédé selon la revendication 10, où l'écoulement du premier courant du flux d'air autour de la boîte de lampe est en outre dirigé par les parois intérieures dudit boîtier (400).

**13.** Procédé selon la revendication 10, où le flux d'air combiné ($A_3$) a une température inférieure à celle du deuxième courant chauffé par la lampe.

**14.** Procédé selon la revendication 13, où la température du flux d'air combiné ($A_3$) est inférieure à 95 °C.

# FIG. 1A

# FIG. 1B

# FIG. 1C

# FIG. 1D

# FIG. 1E

Fig.2

Fig.3

EP 1 395 874 B1

100, 101

110

300, 310

140

120

100, 102

111

401, 402

# Fig.4

110

100

140

401, 402

# Fig.5

100, 101

120

310

321

328

300

120

100, 102

401

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4925295 A